# EUROPEAN PATENT SPECIFICATION

(11) **EP 0 480 747 B1**
(45) Date of publication and mention of the grant of the patent: **18.05.1994**
(21) Application number: 91309377.9
(22) Date of filing: 11.10.1991
(51) Int. Cl.: B64C 1/14, B60J 10/08

(54) **Sealing structure**
Dichtungsprofil
Joint d'étanchéité

(30) Priority: 12.10.1990 GB 9022286
(43) Date of publication of application: 15.04.1992
(73) Proprietor: BRITISH AEROSPACE PUBLIC LIMITED COMPANY, Farnborough, Hants. GU14 6YU (GB)
(72) Inventor: Oliver, David John, British Aerospace Public Ltd., Preston, Lancs PR4 1AX (GB)
(74) Representative: Eastmond, John

(56) References cited:
- DE-A- 2 209 190
- DE-A- 2 406 434
- FR-A- 2 227 166
- US-A- 4 769 950
- PATENT ABSTRACTS OF JAPAN, vol. 6, no. 93 (M-133)[971], 29th May 1982;
- & JP-A-57 30 640 (NISSAN JIDOSHA) 18-02-1982
- PATENT ABSTRACTS OF JAPAN, vol. 7, no. 279 (M-262)[1424], 13th December 1983;& JP-A-58 156 436 (KINUGAWA GOMU KOGYO) 17-09-1983

## Description

This invention relates to sealing structures, for aircraft doors for example, and particularly to seals which unfold to form a gutter for collecting rainwater when the door is open.

Some types of aircraft door are reinforced in certain areas with a honeycomb structure thereby giving the door a non-uniform cross-section. It is an object of this invention to provide a seal which will accommodate such non-uniformities in the door to be sealed.

The present invention therefore comprises a sealing structure for an aircraft consisting of a pliable sealing strip having a first part forming a flange for connection to an aircraft fuselage;
a second part forming inner and outer lips for abutment against an inner face of an aircraft door;
a third part defining a hollow region and connecting the first and second parts and whereby, when the door is open, a rain channel is formed between the outer lip and part of the flange.

The invention has been found to provide adequate sealing for doors having uneven inner surfaces. (Such as doors with honeycomb reinforcements).

A further advantage of this invention is that it has been found to provide adequate sealing for doors whose direction of closing changes as the door's inner surface makes initial contact with the inner and outer lips.

The thickness of the flange may be varied along its length to accommodate any irregularities in the aircraft fuselage outer surface.

Preferably the sealing strip is made from high tear strength silicone rubber.

Preferably the strip is moulded in one piece after being extruded, and then it is cured.

The invention is particularly useful for sealing access panels to electrical equipment bays where it is essential that rain water be prevented from running off the fuselage and onto equipment. In such cases the sealing strip is preferably fixed to the upper and side walls of the equipment bay.

An embodiment of the invention will now be described, by way of example only, with reference to the drawings of which:

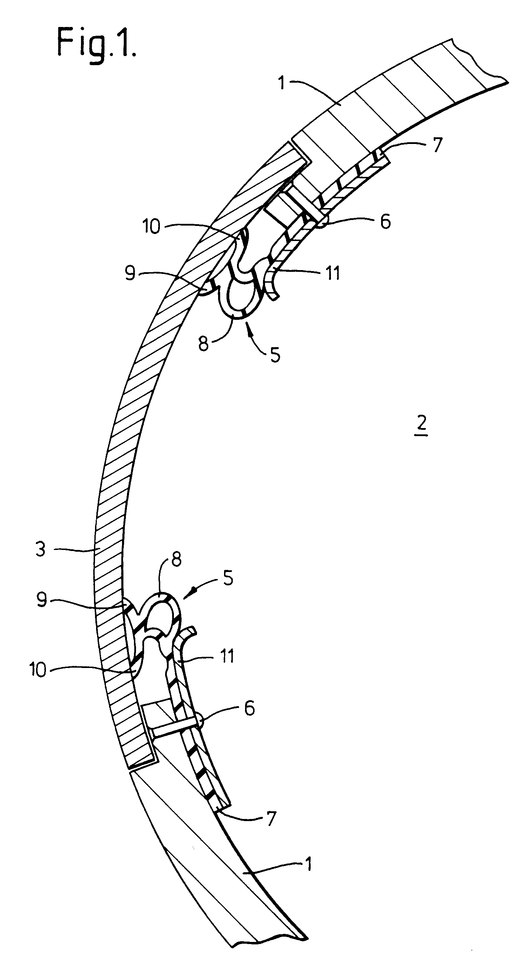

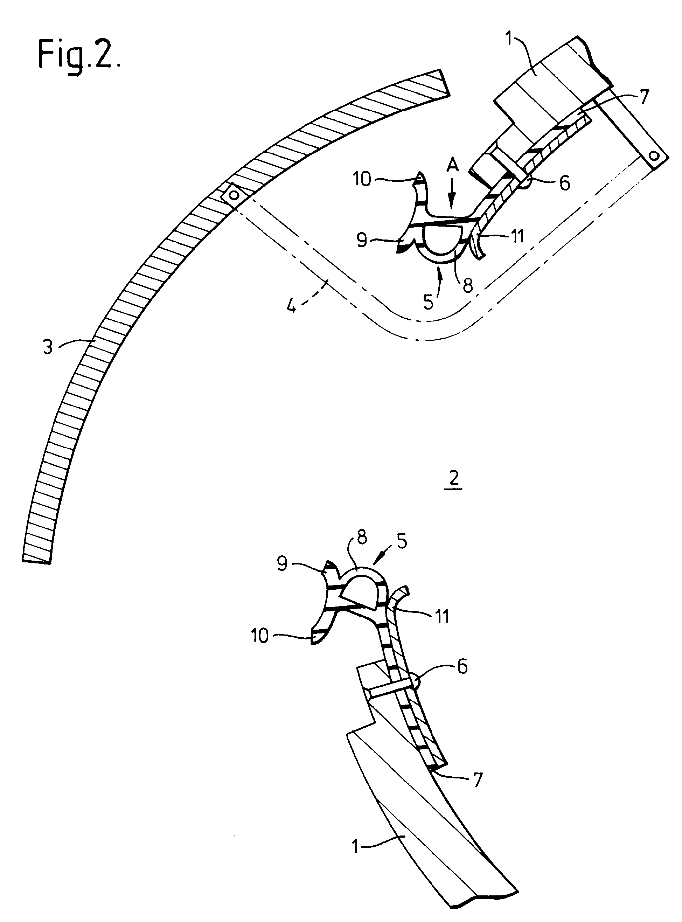

Fig 1 and Fig 2 are cross-sections through an aircraft fuselage incorporating a seal in accordance with the invention.

In Figs 1 and 2 an aircraft fuselage 1 is cut away to form an equipment bay 2. A bay door 3 is attached to the fuselage 1 by two hinges (one of which is shown ghosted and given the reference numeral 4 in Fig 2)

Around the sides of the fuselage defining the bay 2 is secured a sealing strip 5 made from silicone rubber. The strip 5 is attached to the fuselage 1 by a series of rivets 6 which perforate a part of the strip 5 forming a flange 7. The remainder of the strip 5 comprises a hollow compressible bulb 8 which connects the flange 7 with inner and outer lips 9 and 10. A rigid metal backing strip 11 is riveted onto that side of the flange 7 remote from the fuselage 1. When the bay door 3 is closed (see Fig.1) the bulb 8 is compressed against the backing strip 11 and the inner and outer lips 9 and 10 abut the door 3 to form a seal. The bulb 8 serves to give some strength to the inner lip 9 which in turn acts as a lever to cause the outer lip 10 to seal tightly against the door 3.

When the door 3 is open (see Fig 2) the bulb 8 opens up allowing the outer lip 10 to protrude outwards away from the fuselage 1. Thus the region 'A' between the outer lip 10 and lower part of the flange 7 acts as a rain channel for rainwater running off the fuselage 1.

## Claims

1. A sealing structure for an aircraft consisting of a pliable sealing strip (5), and characterised in that the sealing structure comprises:
a first part forming a flange (7) for connection to an aircraft fuselage (1);
a second part forming inner and outer lips (9 and 10) for abutment against an inner face of an aircraft door (3); and
a third part (8) defining a hollow region and connecting the first and second parts and whereby, when the door (3) is open, a rain channel (A) is formed between the outer lip (10) and part of the flange (7).

2. A sealing structure as claimed in Claim 1 in which the pliable sealing strip (5) is made from high tear strength silicone rubber.

3. A sealing structure as claimed in Claim 2 in which the sealing strip (5) is of unitary construction.

4. A sealing structure as claimed in any preceding claim further comprising a rigid metal backing strip (11) for attachment to the flange (7).

## Patentansprüche

1. Dichtungsprofil für ein Flugzeug, bestehend aus einem biegsamen Dichtungsstreifen (5),
dadurch gekennzeichnet, daß das Dichtungsprofil folgende Teile umfaßt:
einen ersten Teil, der einen Flansch (7) zur Verbindung mit dem Rumpf (1) eines Flugzeuges bildet;
einen zweiten Teil, der innere und äußere Lippen (9 und 10) bildet, die Anschläge gegen eine innere Oberfläche einer Flugzeugtür (3) bilden; und
einen dritten Teil (8), der einen hohlen Bereich definiert und den ersten und zweiten Teil verbindet, wodurch bei geöffneter Tür (3) eine Regenrinne A zwischen der äußeren Lippe (10) und einem Teil des Flansches (7) ausgebildet wird.

2. Dichtungsprofil nach Anspruch 1, bei welchem das biegsame Dichtungsprofil (5) aus hochreißfestem Silikongummi besteht.

3. Dichtungsprofil nach Anspruch 2, bei welchem das Dichtungsprofil (5) einseitig ausgebildet ist.

4. Dichtungsprofil nach einem der vorhergehenden Ansprüche, welches außerdem einen starren, metallischen Verstärkungsstreifen (11) aufweist, der am Flansch (7) festgelegt ist.

## Revendications

1. Structure d'étanchéité pour avion constituée d'une bande (5) d'étanchéité pouvant être pliée, et caractérisée en ce que la structure d'étanchéité comporte :
une première partie formant un bord (7) destiné à être relié à un fuselage (1) d'avion,
une deuxième partie formant lèvres intérieure et extérieure (9, 10) destinées à venir en butée contre une face intérieure d'une porte (3) d'avion, et
une troisième partie (8) définissant une zone creuse et reliant la première et la deuxième parties et telle que, lorsque la porte (3) est ouverte, un canal (A) pour pluie soit formé entre la lèvre extérieure (10) et une partie du bord (7).

2. Structure d'étanchéité selon la revendication 1, dans laquelle la bande (5) d'étanchéité pouvant être pliée est constituée de caoutchouc au silicone ayant une résistance élevée au déchirement.

3. Structure d'étanchéité selon la revendication 2, dans laquelle la bande (5) d'étanchéité a une construction en une seule pièce.

4. Structure d'étanchéité selon l'une quelconque des revendications précédentes, comportant en outre une bande de revêtement (11) en métal rigide destinée à la fixation du bord (7).
